# EUROPÄISCHE PATENTANMELDUNG

(11) **EP 0 861 987 A2**
(43) Veröffentlichungstag der Anmeldung: **02.09.1998**
(21) Anmeldenummer: 98103035.6
(22) Anmeldetag: 20.02.1998
(51) Int. Cl.: F16B 39/284

(54) **Blechteil**

(30) Priorität: 28.02.1997 DE 19708286
(71) Anmelder: NEDSCHROEF PLETTENBERG GmbH, D-58840 Plettenberg (Holthausen) (DE)
(72) Erfinder: Mehlberg, Reinhard, 58849 Herscheid (DE)
(74) Vertreter: Alber, Norbert

(57) **Zusammenfassung**

Die Erfindung betrifft ein Metallblech oder Blechteil (1) mit Gewindedurchzug (2). Aufgabe ist, ein Metallblech oder Blechteil mit einem Gewindedurchzug (2) zu schaffen, wobei ohne separates Bauteil eine Sicherung eingeschraubter Schrauben gegen unbeabsichtigtes Lösen erfolgt. Hierbei befindet sich an dessen Mündung (6) eine Schraubensicherung unverlierbar, wobei die Schraubensicherung in wenigstens einer Abflachung des Innengewindes (5) besteht.

## Beschreibung

### I. Anwendungsgebiet

Die Erfindung betrifft ein Metallblech oder Blechteil mit Gewindedurchzug.

### II. Technischer Hintergrund

Aus dem DE-GM 17 32 259 ist eine Schraubensicherung an einer herkömmlichen, massiven Schraubenmutter bekannt, die integraler Bestandteil der Schraubensicherung ist.

Ferner ist es aus DE 43 39 835 C2 bekannt, Metallbleche bzw. einzelne Blechteile, die mit Gewindedurchzügen ausgestattet sind, um in diese Gewindedurchzüge Schrauben oder ähnliche Elemente einschrauben zu können mit einem in eine Innenringnut unverlierbar eingelegten Sicherungsring an der Mündung als Schraubensicherung gegen das selbsttätige Lösen der Schrauben auszustatten.

DE 43 39 835 C2 lehrt jedoch nicht, eine Schraubensicherung anstelle eines separaten, lediglich unverlierbar angeordneten, Ringes durch einfache Verformung des Blechteiles an der Gewindemündung zu bewirken.

Dies wurde bisher für Bleche und Blechteile mit Gewindedurchzügen für nicht möglich gehalten, da davon ausgegangen wurde, daß die Kräfte zur dauerhaften Rückverformung des unrund verformten Gewindes an der Sicherungsstelle wegen der relativ geringen Wandstärke des Materials so niedrig seien, daß nach dem ersten Einschrauben einer Schraube in einen solchen Gewindedurchzug die Sicherungsfunktion nicht mehr gegeben sei.

### III. Darstellung der Erfindung

### a) Technische Aufgabe und Lösung

Ausgehend von diesem Stand der Technik liegt der Erfindung die Aufgabe zugrunde, ein Metallblech oder Blechteil mit einem Gewindedurchzug zu schaffen, wobei ohne separates Bauteil eine Sicherung eingeschraubter Schrauben gegen unbeabsichtigtes Lösen erfolgt.

Es hat sich jedoch herausgestellt, daß die Materialelastizität - speziell bei ST 37 als Material für das Blech bzw. das Blechteil - ab einer Wandstärke von ca. 0,4 mm für das Rohblech, in welches der Gewindedurchzug eingearbeitet wird, groß genug ist, um zwar beim Einschrauben der Schraube eine Rückverformung des Gewindedurchzuges in einen annähernd runden Querschnitt zu bewirken andererseits nach dem Entfernen der Schraube jedoch eine erneute Rückverformung in den unrunden Zustand zu bewirken.

Die beim zweiten Einschrauben einer Schraube aufzubringenden Drehmomente sind dabei naturgemäß niedriger als beim Einschrauben der ersten Schraube, jedoch immer noch - abhängig von Gewindeform, Oberflächenbeschaffenheit der Schraube etc. - hoch genug, um eine Sicherung gegen unbeabsichtigtes Lösen der Schraube zu bewirken.

Durch die - bei Querschnittsbetrachtung - Abflachungen im Innengewinde des Blechteiles, die sich ins Innere des normalen, runden Gewindequerschnittes hineinerstrecken, bzw. von dort aus betrachtet außerhalb liegen, wird dem Gewinde der einzuschraubenden Schraube, welche einen runden Querschnitt besitzt, durch die Abflachungen ein erhöhter Gegenstand entgegengesetzt, der auch für das Lösen und Herausschrauben der Schraube großenteils erhalten bleibt aufgrund der Materialelastizität des Blechteiles.

Die Wirkung der Abflachung vom normalen Gewindequerschnitt aus nach außen besteht darin, daß diese Abflachung durch radiales Anpressen eines Stempels gegen das Innengewinde von innen nach außen erzeugt wird, und dadurch die Gewindespitzen flachgedrückt werden, mithin also die Gewindeflanken steiler werden als im Ausgangszustand des Gewindes, und insbesondere steiler als es der Formgebung des Außengewindes der einzuschraubenden Schraube entspricht. Diese Verformung der Gewindeform selbst muß beim Einschrauben der Schraube teilweise wieder rückgängig gemacht werden, wodurch eine erhöhte Anpressung zwischen den Flanken der aneinander liegenden Gewinde erzielt wird.

Dadurch ist eine Schraubensicherung ohne separates Bauteil möglich, wodurch einerseits Montageaufwand für das Einlegen des separaten Bauteils in das Blechteil eingespart wird und zum anderen - bei einem metallenen korrosionsfähigen, separaten Sicherungsteil - zusätzliche Kontaktflächen zwischen Sicherungsring und Blechteil, die Angriffsflächen für Spaltkorrosion bilden können, vermieden werden.

Insbesondere hat sich gezeigt, daß es darauf ankommt, nicht eine Vielzahl von relativ starken Verformungen am Umfang des Innengewindes im Blechteil vorzusehen, sondern nur ein oder wenige flach ausgeführte Abflachungen, da dies die Rückstellung aufgrund Materialelastizität eher begünstigt. Es sollen also vorzugsweise nicht mehr als fünf, insbesondere nicht mehr als drei Abflachungen über den Umfang des Innengewindes gleichmäßig verteilt angeordnet sein, wobei die Abflachungen tangential über ein Winkelsegment (Flachungswinkel) von mindestens 7° besitzen, und die Gesamterstreckung der Abflachung, einschließlich Übergänge in die normale, runde Gewindekontur (Übergangswinkel), mindestens einen Winkelsektor von 25° überdeckt.

Die Abflachung sollte dabei um eine solche Strecke gegenüber dem normalen runden Gewinderadius nach innen oder außen versetzt sein, die wenigstens der halben Differenz zwischen dem Radius des Gewindeteilkreises und dem Radius des Gewindeinnendurchmessers des Innengewindes beträgt.

Zusätzlich kommt es auch darauf an, welche Höhe, also in axialer Richtung des Gewindes, die Abflachung bzw. Abflachungen besitzen. Dabei hat es sich erwiesen, daß sich einerseits die Mindesthöhe der Abflachung umgekehrt proportional zur Wandstärke des Blechmaterials verhalten muß, und bei etwa 0,4 mm starkem Blech etwa der Blechstärke entsprechen sollte. Zusätzlich sollte die Abflachung jedoch eine Höhe von mindestens zwei Gewindegängen in Längsrichtung des Gewindes besitzen.

Weiterhin kommt es teilweise auf die axiale Erstreckung des Überganges zwischen der Abflachung und dem runden Teil des Gewindedurchzuges an. Diese Übergangshöhe sollte mindestens der Höhe der Abflachung selbst entsprechen, vorzugsweise jedoch mindestens das doppelte der Höhe der Abflachung betragen. Auf der anderen Seite sollte diese Übergangshöhe nicht mehr als zwei Drittel der Länge des gesamten Gewindedurchzuges betragen.

Wichtig ist ferner die Anordnung der Abflachungen in axialer Richtung des Gewindedurchzuges:

Am einfachsten ist die Anordnung am freien Ende des Gewindedurchzuges, da an dieser Stelle auch keine Beschädigungen, insbesondere Reißen, des Überganges vom Gewindedurchzug zum Blechteil zu befürchten steht, und dort auch die Federungswirkung des Gewindedurchzuges am größten ist, was der häufigen Wiederholbarkeit der Gewindesicherung entgegenkommt.

Vorteilhaft ist jedoch auch die Anordnung der Abflachungen etwa in der Mitte der axialen Erstreckung, da hierdurch die Möglichkeit geboten wird, Schrauben zu sichern unabhängig davon, ob diese von dem freien Ende des Gewindedurchzuges oder von der Seite des Blechteiles her eingeschraubt wird.

### b) Ausführungsbeispiele

Eine Ausführungsform gemäß der Erfindung ist im folgenden anhand der Figuren beispielhaft näher beschrieben. Es zeigen:
- Fig. 1:: einen Querschnitt durch einen Gewindedurchzug,
- Fig. 2:: eine Aufsicht auf den Gewindedurchzug gemäß Fig. 1,
- Fig. 3:: einen Querschnitt durch einen anderen Gewindedurchzug,
- Fig. 4:: eine Aufsicht auf den Gewindedurchzug gemäß Fig. 3,
- Fig. 5:: einen Querschnitt durch einen weiteren Gewindedurchzug,
- Fig. 6:: eine Aufsicht auf den Gewindedurchzug gemäß Fig. 5,
- Fig. 7:: einen Querschnitt durch einen weiteren Gewindedurchzug, und
- Fig. 8:: eine Aufsicht auf den Gewindedurchzug gemäß Fig. 7.

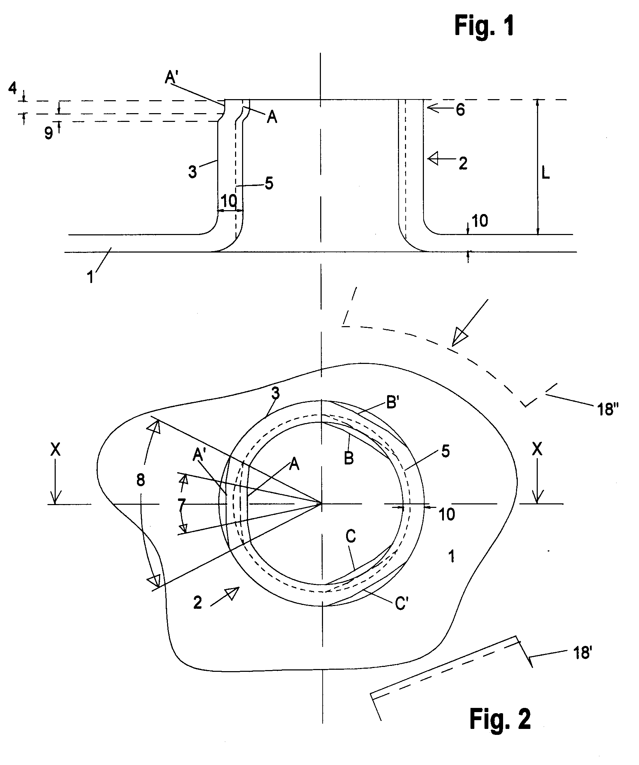

Fig. 1 zeigt den aus der Ebene des Bleches 1 hochgezogenen, turmartigen, im wesentlichen hohlzylindrischen Gewindedurchzug 2, in dessen Innenumfang ein Innengewinde 5 eingeschnitten ist, um dort eine Schraube etc. einschrauben zu können.

Am freien oberen Ende, der Mündung 6, dieses Gewindedurchzuges 2 sind - wie besser in der Aufsicht der Fig. 2 zu erkennen - am Innenumfang des Gewindedurchzuges und damit am Innengewinde 5 selbst drei Abflachungen A, B, C ausgebildet. Da diese Abflachungen A, B, C in der Regel durch radiales nach innen Fressen vom Außenumfang 3 her mittels gerader oder dem Außenumfang angepaßt gebogener tangentialer Stempel erzeugt werden, finden sich die Abflachungen A, B, C analog auch am Außenumfang des Gewindedurchzuges als Abflachungen A', B', C'. Die tangentialen Stempel gehen dabei in der Regel seitlich, also in Umfangsrichtung betrachtet, über die Anpreßfläche am Außenumfang hinaus, wie in Fig. 2 angedeutet.

Fig. 1, die einen Längsschnitt durch den Gewindedurchzug 2 entlang der Linie X-X der Fig. 2 zeigt, stellt dementsprechend nur eine einzige Abflachung A/A' der drei gleichmäßig über den Umfang verteilten Abflachungen dar. dabei ist ersichtlich, daß die Abflachung sich nicht über die gesamte Länge L des Gewindedurchzuges 2 erstreckt, sondern nur in deren oberen Bereich, und dabei eine Höhe 4 der eigentlichen Abflachung erzielt, die deutlich geringer ist als die Länge L des Gewindedurchzuges.

Die Übergangshöhe 9, also die axiale Distanz zwischen dem vollständigen Erreichen der Abflachung und dem Erreichen der normalen Außenkontur, beträgt dabei in etwa der Höhe 4 der Abflachung selbst, und ist als schräger Übergang ausgebildet.

Ebenso zeigt die Aufsicht der Fig. 2, daß die Abflachung A bzw. A', die in ihrem Mittelbereich tangential zur runden Umfangskontur des Innengewindes 5 bzw. des Gewindedurchzuges 2 verläuft, mit dieser tangentialen Erstreckung nicht in die runde Umfangskontur direkt übergeht, sondern sich dazwischen, an beiden Enden des tangentialen Bereiches, der sich über einen Flachungswinkel 7 erstreckt, ein schräger Übergang vom tangentialen Bereich in die runde Normalkontur befindet, und dieses Winkelsegment, welches nicht nur den tangentialen Bereich, sondern auch den Übergangsbereich mit umfaßt, einen Übergangswinkel 8 abdeckt, der mindestens das Doppelte des Flachungswinkels 7 beträgt.

Aus den Figuren 1 und 2 ist ferner ersichtlich, daß die radiale Verformung an den Abflachungen mindestens der radialen Differenz zwischen dem Teilkreis des Innengewindes 5 und dem Innenumfang des Innengewindes 5 entspricht.

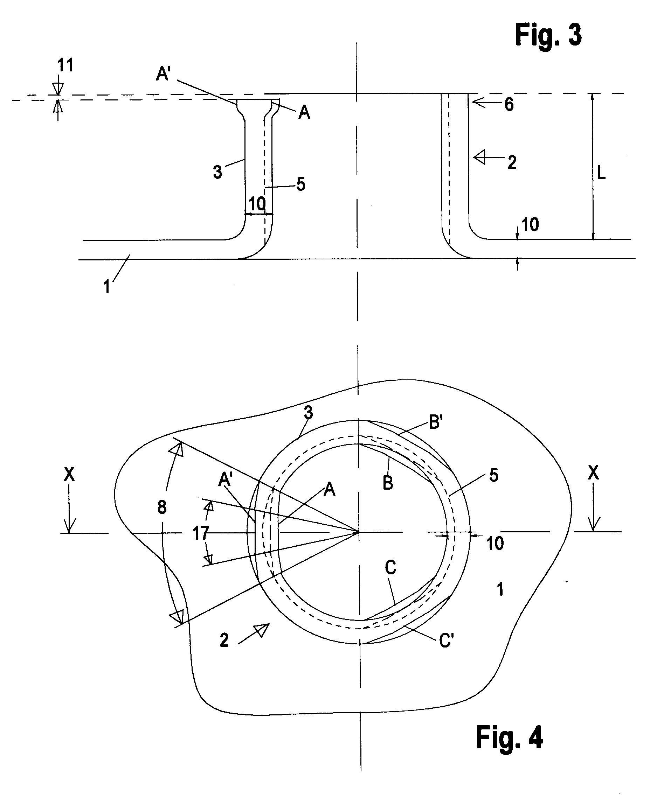

Die Figuren 3 und 4 zeigen wiederum über den Umfang gleichmäßig verteilt drei Abflachungen A, B, C, die jedoch durch Stauchung des Gewindedurchzuges 2 von seiner freien Stirnseite her in axialer Richtung des Gewindes an den entsprechenden Umfangsstellen erzeugt wurden. Dadurch wird die Länge L des Gewindedurchzuges um die Höhendifferenz 11 im Winkelbereich des Flachungswinkels 17 reduziert. Dabei hat also der in Fig. 3 von oben nach unten wirkende, zum Stauchen verwendete Stempel eine Breite entsprechend dem Flachungswinkel 17 der Fig. 4, wobei jedoch die angrenzenden Bereiche ebenfalls in der Höhe reduziert werden.

Insgesamt hat wiederum eine Höhenreduzierung über einen wesentlich größeren Übergangswinkel 8 stattgefunden, indem der Gewindedurchzug 2 von seiner Gesamtlänge L abweicht.

Durch das Stauchen in axialer Richtung tritt eine Verbreiterung der Wandung des Gewindedurchzuges 2 in seinem Mündungsbereich 6 sowohl auf der Innenseite nach innen als auch auf der Außenseite nach außen ein.

Die Verbreiterung nach innen ergibt den gewünschten Sicherungseffekt.

Speziell bei der axialen Stauchung des Gewindedurchzuges gemäß Fig. 3 und 4, die nur eine relativ geringe Abflachung A, B, C hinsichtlich der axialen Erstreckung ergibt, können auch mehr als drei, beispielsweise 5 oder 6, Abflachungen über den Umfang verteilt vorgesehen werden.

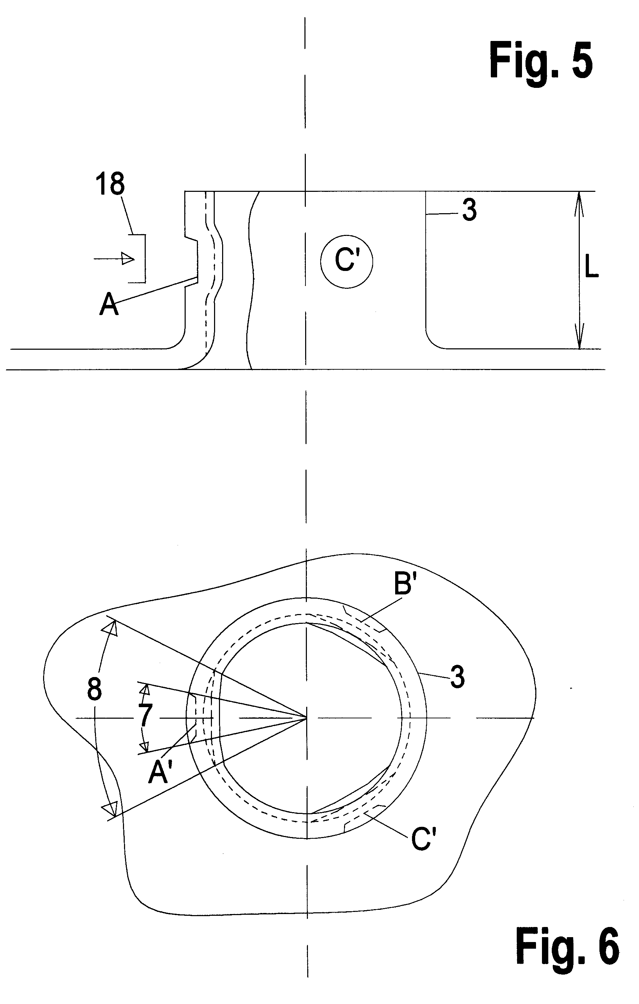

Die Figuren 5 und 6 zeigen Querschnitt und Aufsicht einer Gewindeverformung, die ebenfalls durch radiales nach innen Pressen gegen den Außenumfang 3 des Gewindedurchzuges gebildet wird. Hinsichtlich der Umfangserstreckung gilt das anläßlich der Figuren 1 und 2 Gesagte, jedoch mit dem Unterschied, daß die Verpressung nicht durch einen tangential in Umfangsrichtung über die Kontaktfläche mit dem Außenumfang 3 hinausgehenden Stempel 18' bzw. 18'' bewirkt wird, sondern mittels eines Stempels 18, der so klein bemessen ist, und insbesondere eine runde Kontur besitzt, daß er einen auf dem Außenumfang 3 einen Abdruck hinterläßt, der den kompletten Umfang des Stempels 18 erkennen läßt, und in Umfangsrichtung nicht in die ursprüngliche Kontur des Außenumfanges 3 übergeht.

In den Figuren 5 und 6 ist weiterhin zu erkennen, daß sich diese Abflachungen A, B, C bzw. A', B', C' nicht an der Mündung 6, also am freien Ende des Gewindedurchzuges befinden müssen, sondern auch in der Mitte der axialen Erstreckung L des Gewindedurchzuges angeordnet sein können.

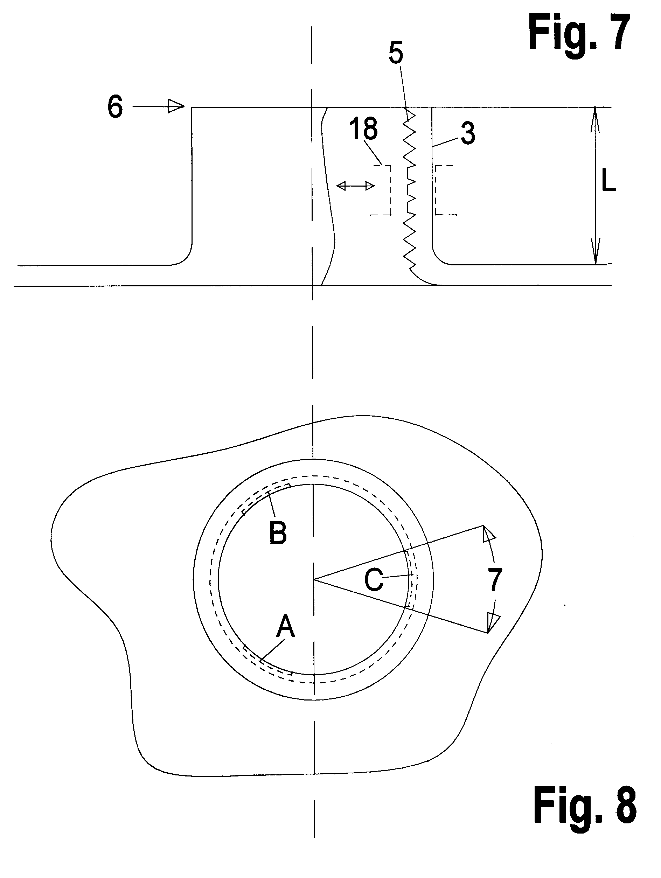

Die Figuren 7 und 8 zeigen wiederum einen Gewindedurchzug, der sich hinsichtlich seiner Abflachungen von den Figuren 1-6 grundsätzlich dadurch unterscheidet, daß sich die Abflachungen A, B; C - wie in Fig. 8 dargestellt - vom normalen Innenumfang des Innengewindes 5 nicht radial nach innen, sondern radial nach außen erstrecken. Dennoch wird dadurch eine Schraubensicherung erzielt, da die radial von innen nach außen bewirkten Abflachungen A, B, C durch Anpressen eines Stempels 18 von innen nach außen gegen das Innengewinde 5 bewirkt wird, bei sehr geringen Blechstärken 10 des Gewindedurchzuges eventuell unterstützt durch einen gegen den Außenumfang 3 angedrückten Gegenstempel oder Gegenhalter. Das radiale nach außen Drücken des Stempels 18 bewirkt im Bereich des Stempels ein Flachdrücken der Spitzen des Innengewindes 5. Das hierbei verdrängte Material bewirkt, daß die Gewindeflanken des verbleibenden, im Querschnitt betrachtet kegelstumpfförmigen, Gewindes steiler ausgebildet werden, und zwar steiler als es die Gewindeform der einzuschraubenden Schraube erlaubt. Beim Einschrauben der Schraube ist daher ein Rückverformen der zu steilen Gewindeflanken des Innengewindes 5 im verformten Bereich notwendig, was die Schraubensicherung bewirkt.

Das Flachpressen des Innengewindes 5 wird nur auf maximal der Hälfte der Gewindetiefe, als in radialer Richtung des Gewindedurchzuges betrachtet, vorgenommen, um eine ausreichende Tragfähigkeit des Gewindes in diesem Bereich nicht zu unterschreiten.

Auch im Beispiel der Figuren 7 und 8 sind drei Abflachungen A, B, C über den Umfang verteilt angeordnet, und auf halber Höhe der axialen Länge L des Gewindedurchzuges angeordnet. Die Anordnung könnte in axialer Richtung jedoch auch am freien Ende, also der Mündung 6 des Gewindedurchzuges, oder auch im gegenüber liegenden Endbereich vorgenommen werden.

### BEZUGSZEICHENLISTE

- 1: Blech
- 2: Gewindedurchzug
- 3: Außenumfang
- 4: Höhe
- 5: Innengewinde
- 6: Mündung
- 7: Flachungswinkel
- 8: Übergangswinkel
- 9: Übergangshöhe
- 10: Wandstärke
- 17: Flachungswinkel
- A, B, C: Abflachungen
- L: Länge

## Patentansprüche

1. Metallblech oder Blechteil mit Gewindedurchzug, an dessen Mündung sich eine Schraubensicherung unverlierbar befindet,
**dadurch gekennzeichnet, daß**
die Schraubensicherung in wenigstens einer Abflachung (A) des Innengewindes (5) besteht.

2. Metallblech oder Blechteil nach Anspruch 1,
**dadurch gekennzeichnet, daß**
zwei oder drei oder mehr Abflachungen (A, B, C) über den Umfang des Innengewindes verteilt angeordnet sind.

3. Metallblech oder Blechteil nach einem der vorhergehenden Ansprüche,
**dadurch gekennzeichnet, daß**
die Abflachungen (A, B, C) innerhalb der kreisförmigen Normalform des Innengewindes liegen.

4. Metallblech oder Blechteil nach einem der vorhergehenden Ansprüche,
**dadurch gekennzeichnet, daß**
der Flachungswinkel (7), über den die Abflachung im wesentlichen tangential zur runden Kontur des Gewindes verläuft, mindestens 7° bei drei über den Umfang verteilten Abflachungen (A, B, C) beträgt, bei geringerer bzw. größerer Anzahl von Abflachungen einen analog erhöhten bzw. erniedrigter Winkel.

5. Metallblech oder Blechteil nach einem der vorhergehenden Ansprüche,
**dadurch gekennzeichnet, daß**
der Übergangswinkel (8), indem das Innengewinde keine runde Kontur aufweist, mindestens 25° ° bei drei über den Umfang verteilten Abflachungen (A, B, C) beträgt, bei geringerer bzw. größerer Anzahl von Abflachungen einen analog erhöhten bzw. erniedrigter Winkel.

6. Metallblech oder Blechteil nach einem der vorhergehenden Ansprüche,
**dadurch gekennzeichnet, daß**
die Höhe (4) der Abflachung (A, B, C) bei einer Wandstärke (10) von 0,4 mm der Wandstärke (10) entspricht und sich ansonsten umgekehrt proportional zur Wandstärke (10) verhält, jedoch mindestens der axialen Erstreckung von zwei Gewindegängen des Innengewindes (5) beträgt.

7. Metallblech oder Blechteil nach einem der vorhergehenden Ansprüche,
**dadurch gekennzeichnet, daß**
die Übergangshöhe (9) in axialer Richtung zwischen dem Beginn der vollständigen Abflachung (A, B oder C) und dem normalen Gewindeumfang mindestens der Höhe (4) der Abflachung entspricht.

8. Metallblech oder Blechteil nach einem der vorhergehenden Ansprüche,
**dadurch gekennzeichnet, daß**
die Abflachungen (A', B', C') des Außenumfanges (3) durch radiales Andrücken eines geraden oder bogenförmig dem Außenumfang (3) angepaßten, tangentialen Stempels von außen nach innen erzeugt werden.

9. Metallblech oder Blechteil nach Anspruch 8,
**dadurch gekennzeichnet, daß**
die Abflachungen (A', B', C') des Außenumfanges (3) durch radiales Andrücken eines Stempels, dessen Erstreckung in Umfangsrichtung geringer ist als die am Innengewinde (5) bewirkte Abflachung erzeugt werden, und der Stempel insbesondere eine runde Kontur aufweist und insbesondere einen rechteckigen oder konischen Querschnitt aufweist.

10. Metallblech oder Blechteil nach einem der vorhergehenden Ansprüche,
**dadurch gekennzeichnet, daß**
die Abflachungen (A, B, C, ...) in axialer Richtung am freien Ende oder etwa in der Mitte der axialen Erstreckung des Gewindedurchzuges angeordnet sind.

11. Metallblech oder Blechteil nach einem der vorhergehenden Ansprüche,
**dadurch gekennzeichnet, daß**
die Abflachungen (A, B, C) des Innengewindes (5) nach innen zusammen mit einer Ausbuchtung des Außenumfanges (3) nach außen in diesem Bereich, verbunden mit einer Reduzierung der Länge (L) des Gewindedurchzuges (2) in axialer Richtung von der freien Stirnseite her, ausgebildet sind.

12. Metallblech oder Blechteil nach Anspruch 1 oder 2,
**dadurch gekennzeichnet, daß**
die Abflachungen (A, B, C, ...) außerhalb der kreisförmigen Normalform des Innengewindes (5) liegen.

13. Metallblech oder Blechteil nach einem der vorhergehenden Ansprüche,
**dadurch gekennzeichnet, daß**
die Abflachungen durch radiales Anpressen eines Stempels (18) von innen nach außen gegen das Innengewinde (5) erzeugt werden.

14. Metallblech oder Blechteil nach Anspruch 13,
**dadurch gekennzeichnet, daß**
die Verpressung des Innengewindes (5) in radialer Richtung maximal zwei Drittel der Gewindetiefe beträgt.

15. Metallblech oder Blechteil nach Anspruch 13 oder 14,
**dadurch gekennzeichnet, daß**
die Verpressung über mindestens zwei oder drei Gewindegänge, in axialer Richtung betrachtet, vollzogen wird.

16. Metallblech oder Blechteil nach einem der Ansprüche 12 bis 15,
**dadurch gekennzeichnet, daß**
die Verpressung in axialer Richtung in der Nähe des freien Ende des Gewindedurchzuges oder im mittleren Bereich des Gewindedurchzuges angeordnet ist.
